# DEMANDE DE BREVET EUROPEEN

(11) **EP 2 621 205 A1**
(43) Date de publication de la demande: **31.07.2013**
(21) Numéro de dépôt: 13151287.3
(22) Date de dépôt: 15.01.2013
(51) Int. Cl.: H04W 12/02, H04W 4/02, H04L 29/08

(54) **Procédé d'interrogation d'un terminal mis en oeuvre par un serveur d'application.**

(30) Priorité: 26.01.2012 FR 1250767
(71) Demandeur: FRANCE TELECOM, 75015 Paris (FR)
(72) Inventeur: Martelli, Frédéric, 22300 Lannion (FR)
(74) Mandataire: Delumeau, François Guy

(57) **Abrégé**

Procédé d'interrogation d'un terminal mis en oeuvre par un serveur d'application.

Ce procédé d'interrogation d'un terminal (20) mis en oeuvre par un serveur d'application comporte :
- une étape (F10) de réception d'une requête (RQ) émise par un premier terminal (T1) pour obtenir une information (LOC1, LOC2) d'un deuxième terminal (20) équipé d'une carte UICC (10a, 10b), l'identifiant (ID10) de ladite carte étant compris dans ladite requête ;
- une étape (F20) d'envoi d'une requête (RQ2) comportant ledit identifiant à une entité (40) apte à envoyer audit deuxième terminal (20) un message court (M1) interprétable par la carte UICC (10a, 10b) incorporée dans un terminal (20), ce message comportant des instructions (INST) pour obtenir une information (LOC1, LOC2) du terminal (20), et des instructions (INST) pour déclencher l'envoi, au serveur par le terminal (20), d'un message (M2) comportant ladite information.
- une étape (F30) de réception du message de réponse (M2) envoyé par ledit deuxième terminal (20) ; et
- une étape (F40) de présentation de ladite information (LOC1, LOC2) audit premier terminal (T1).

## Description

L'invention propose un mécanisme pour interroger un terminal à distance afin d'obtenir une information sur ce terminal.

L'invention permet en particulier, mais de façon non limitative, d'obtenir une information de localisation d'un terminal.

Dans l'état actuel de la technique, on connait notamment les services de localisation de terminaux sont des services WEB dans lesquels l'utilisateur d'un terminal souscrit à un service par lequel il autorise explicitement d'autres utilisateurs à obtenir sa localisation.

L'information de localisation peut par exemple être obtenue par un module GPS incorporé dans le terminal.

La fourniture de l'information de localisation étant soumise à autorisation, il suffit à l'utilisateur de renoncer à cette autorisation pour que son terminal ne puisse plus être localisé.

L'invention vise un mécanisme de localisation qui ne présente pas des inconvénients de l'état de la technique.

### Objet et résumé de l'invention

Plus précisément, et selon un premier aspect, l'invention concerne une carte UICC (Universal Integrated Circuit Card) comportant :
- des moyens d'obtention d'une information du terminal incorporant cette carte ; et
- des moyens de contrôle aptes à déclencher l'envoi à un serveur, par le terminal, d'un message comportant cette information.

Corrélativement, l'invention vise un procédé mis en oeuvre par une carte UICC, ce procédé comportant :
- une étape d'obtention d'une information du terminal incorporant cette carte ; et
- une étape de contrôle apte à déclencher l'envoi à un serveur, par le terminal, d'un message comportant cette information.

La carte UICC selon l'invention peut notamment être constituée par une carte SIM (Subscriber Identity Module) tel que définie par les spécifications du 3GPP.

L'information obtenue par la carte UICC et envoyée à un serveur peut être de tout type. Il peut par exemple s'agir d'une information de présence, d'une information associée à un agenda du terminal ou d'une information de localisation.

Conformément à l'invention, l'obtention de l'information et son envoi à un serveur sont transparents pour l'utilisateur, et ne nécessitent aucune interaction avec l'utilisateur.

L'invention permet ainsi de localiser des terminaux sans que les utilisateurs de ces terminaux en aient conscience et en tout état de cause sans leur autorisation.

Dans un mode préféré de réalisation de l'invention, la carte UICC comporte :
- des moyens de réception d'un message court, ce message comportant des instructions pour obtenir l'information recherchée et des instructions pour déclencher l'envoi du message comportant cette information ; et
- des moyens pour exécuter automatiquement ces instructions sur réception du message court.

Le message court peut être de type STK. Pour mémoire, on rappelle que le standard STK permet un échange entre une carte UICC et le terminal. Il nécessite le chargement préalable sur le carte UICC d'un programme léger, typiquement une applet, pour permettre l'interprétation des instructions reçues du terminal.

En variante, le message court peut être de type D-STK (Dynamic STK), ce mode de réalisation ne nécessitant pas le chargement d'une applet sur le terminal. Ce mode de réalisation particulièrement avantageux facilite la diffusion de nouveaux services.

Dans une première variante de réalisation, la carte UICC selon l'invention comporte des moyens pour interroger le terminal pour obtenir l'information en utilisant une interface standardisée avec le terminal telle que définie par la norme 3GPP TS 31.111.

Dans une autre variante de réalisation, la carte UICC selon l'invention comporte des moyens pour lire l'information à partir d'une mémoire interne à la carte UICC.

Dans un mode particulier de réalisation, la carte UICC selon l'invention comporte des moyens de décryptage du message court.

Ce mode de réalisation permet de crypter les échanges entre le réseau et la carte UICC. Il permet de limiter l'accès au service aux seules entités autorisées, par exemple uniquement à l'opérateur du réseau de télécommunications.

Les moyens de contrôle de la carte UICC selon l'invention sont aptes à déclencher l'envoi du message comportant l'information selon un format de communication quelconque. Ce format de communication peut par exemple être conforme à la norme SMS, au protocole sécurisé HTTPS, au format USSD, au protocole SIP ou au protocole SIP sécurisé.

Selon un autre aspect, l'invention vise un message court interprétable par une carte UICC incorporée dans un terminal, ce message comportant des instructions pour obtenir une information du terminal et des instructions pour déclencher l'envoi à un serveur, par le terminal, d'un message comportant cette information.

Dans un mode particulier de réalisation, le message court est de type D-STK.

L'invention vise aussi un serveur d'application comportant :
- des moyens de réception d'une requête émise par un premier terminal pour obtenir une information d'un deuxième terminal équipé d'une carte UICC, l'identifiant de la carte étant compris dans la requête ;
- des moyens d'envoi d'une requête comportant cet identifiant à une entité apte à envoyer au deuxième terminal un message court tel que mentionné ci-dessus ;
- des moyens de réception du message de réponse envoyé par le deuxième terminal ; et
- des moyens de présentation de cette information au premier terminal.

Lorsque l'information recherchée est une information de localisation, le serveur selon l'invention peut par exemple être un serveur hébergeant un service web de contrôle parental ou de surveillance d'une flotte de véhicules.

Corrélativement, l'invention vise un procédé d'interrogation d'un terminal mis en oeuvre par un serveur d'application, ce procédé comportant :
- une étape de réception d'une requête émise par un premier terminal pour obtenir une information d'un deuxième terminal équipé d'une carte UICC, l'identifiant de la carte étant compris dans la requête ;
- une étape d'envoi d'une requête comportant cet identifiant à une entité apte à envoyer au deuxième terminal un message court tel que mentionné ci-dessus ;
- une étape de réception du message de réponse envoyé par ce deuxième terminal ; et
- une étape de présentation de cette information au premier terminal.

Dans un mode particulier de réalisation, lorsque l'information recherchée est une information de localisation, les moyens de présentation du serveur d'application selon l'invention sont aptes à représenter la localisation du deuxième terminal sur une carte.

Dans un mode particulier de réalisation, les différentes étapes du procédé mis en oeuvre par la carte UICC et les différentes étapes du procédé d'interrogation sont déterminées par des instructions de programmes d'ordinateurs.

En conséquence, l'invention vise aussi un programme d'ordinateur sur un support d'informations, ce programme étant susceptible d'être mis en oeuvre dans un serveur ou plus généralement dans un ordinateur, ce programme comportant des instructions adaptées à la mise en oeuvre des étapes du procédé d'interrogation tel que mentionné ci-dessus.

L'invention vise aussi un programme d'ordinateur sur un support d'informations, ce programme étant susceptible d'être mis en oeuvre dans une carte UICC, ce programme comportant des instructions adaptées à la mise en oeuvre:
- d'une étape d'obtention d'une information d'un terminal incorporant cette carte ; et
- d'une étape de contrôle apte à déclencher l'envoi à un serveur, par le terminal, d'un message comportant cette information.

L'un et l'autre de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un terminal comportant une carte UICC conforme à un premier mode de réalisation de l'invention ;
- la figure 2 représente un premier scénario de mise en oeuvre de l'invention ;
- la figure 3 représente un terminal comportant une carte UICC conforme à un deuxième mode de réalisation de l'invention ;
- la figure 4 représente un deuxième scénario de mise en oeuvre de l'invention ; et
- la figure 5 représente l'architecture matérielle d'un serveur d'application conforme à un mode particulier de réalisation de l'invention.

### Description détaillée de l'invention

L'invention va maintenant être décrite dans le contexte dans lequel l'information du terminal recherchée au sens de l'invention est une information de localisation.

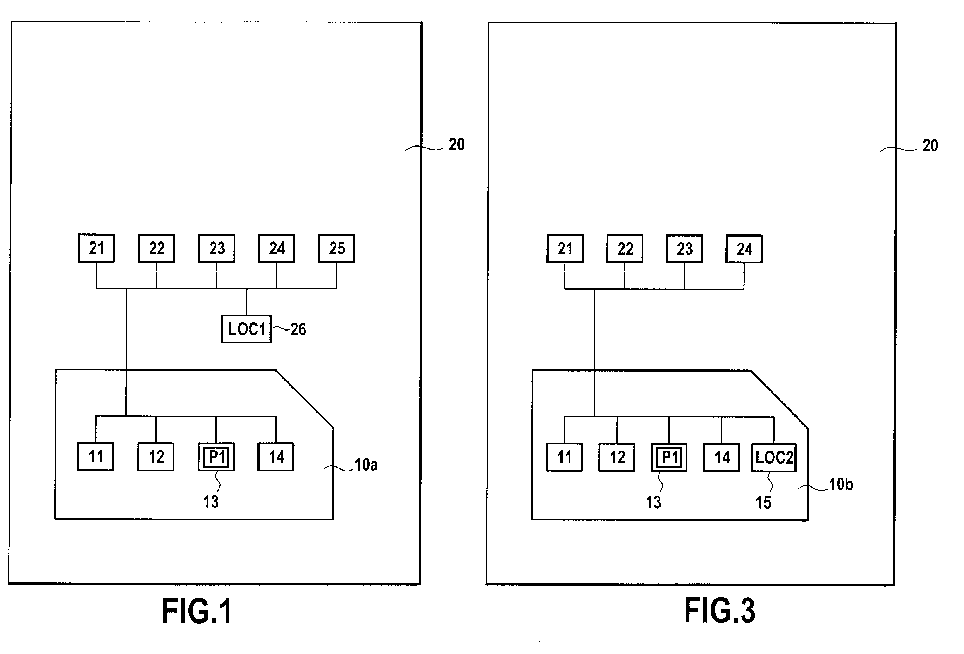

La figure 1 représente une carte UICC 10a conforme à un premier mode de réalisation de l'invention.

Cette carte UICC comporte un processeur 11, une mémoire vive de type RAM 12, une mémoire morte de type ROM 13 et des moyens 14 aptes à décrypter un message court de type D-STK.

La carte UICC 10a est incorporée dans un terminal 20.

Dans l'exemple de réalisation décrit ici, ce terminal 20 a l'architecture matérielle d'un ordinateur. Il comporte notamment un processeur 21, une mémoire vive de type RAM 22, une mémoire morte de type ROM 23, des moyens 24 de communication et des moyens de géolocalisation GPS 25, la localisation LOC1 du terminal étant mémorisée dans une mémoire non volatile réinscriptible 26.

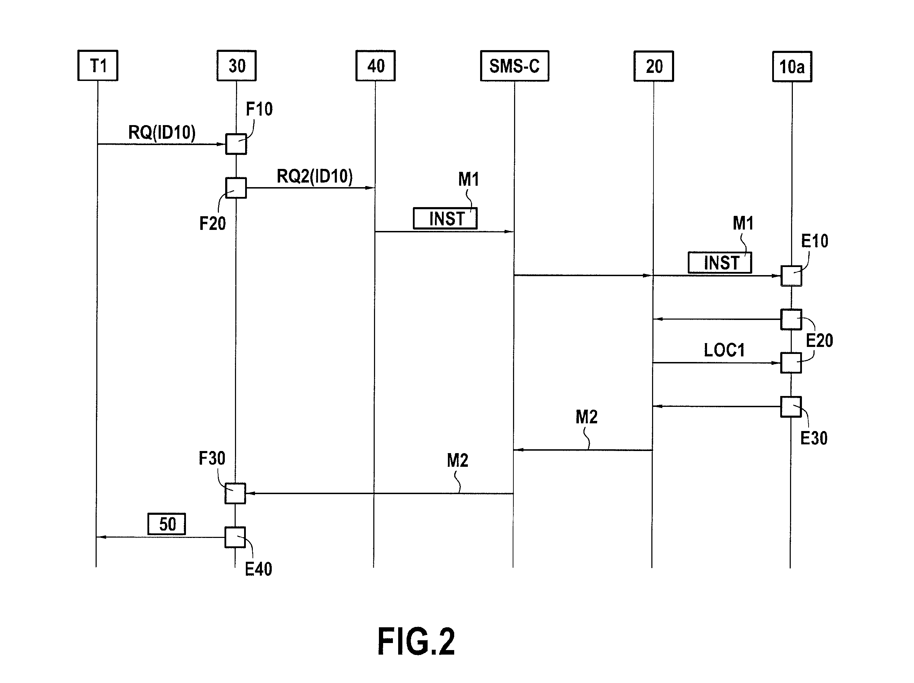

Un scénario de mise en oeuvre de l'invention dans ce premier mode de réalisation est maintenant décrit en référence à la figure 2.

On suppose, dans cet exemple, qu'un terminal T1 envoie à un serveur d'application 30 conforme à l'invention, une requête RQ pour obtenir une information de localisation du terminal 20 de la figure 1. La requête RQ comporte l'identifiant ID10 de la carte UICC 10a de ce terminal.

Cet identifiant ID10 est par exemple un numéro de téléphonie ou une identité de type SIP/IMS.

Cette requête est reçue par le serveur d'application 30 selon l'invention au cours d'une étape F10.

Au cours d'une étape F20, le serveur d'application 30 envoie une requête RQ2 comportant l'identifiant ID10 à une entité 40.

Cette entité 40 est apte à créer un message court M1 de type D-STK, interprétable par la carte UICC 10a, ce message comportant des instructions INST pour, lorsqu'elles sont exécutées par la carte UICC 10a, obtenir une localisation du terminal 20 et déclencher l'envoi, au serveur 30, par le terminal 20, d'un message M2 comportant cette information de localisation.

L'entité 40 envoie le message M1 au terminal 20 par l'intermédiaire d'un serveur SMS-C.

Le message M1 est reçu par la carte UICC 10a selon l'invention au cours d'une étape E10.

Au cours d'une étape E20, la carte UICC 10a interroge le terminal 20 pour obtenir l'information de localisation LOC1 mémorisée dans la mémoire non volatile réinscriptible 26.

Plusieurs solutions sont envisageables. Par exemple, la carte UICC peut envoyer au terminal une requête « Geographical Location Request » du protocole STK standardisé dans le document 3GPP TS 31.111 pour interroger le terminal afin d'obtenir sur une information de localisation du terminal de type GPS. Notamment si le terminal ne possède pas de module GPS, la carte UICC peut interroger le terminal pour obtenir des informations plus basiques (type country code, cell id ... ) en utilisant la requête « PROVIDE LOCAL INFORMATION ».

Au cours d'une étape E30, la carte UICC 10a déclenche l'envoi, par le terminal 20, d'un message M2 comportant l'information de localisation LOC1.

Il est important de noter que les étapes E10, E20 et E30 ne demandent aucune intervention de l'utilisateur du terminal 20.

En effet, les étapes E20 et E30 sont déclenchées automatiquement sur réception du message court de type D-STK M1.

Dans l'exemple de réalisation décrit ici, le message M2 envoyé par le terminal 20 est un message court SMS. Ce message court est acheminé jusqu'au serveur 30 par l'intermédiaire du serveur SMS-C.

Le message court est reçu par le serveur 30 selon l'invention au cours d'une étape F30.

Dans l'exemple de réalisation décrit ici, le serveur 30 représente, au cours d'une étape F40, la localisation du terminal 20 sur une carte 50, cette carte étant présentée à l'utilisateur du terminal T1.

La figure 3 représente un terminal 20 comportant une carte UICC 10b conforme à un deuxième mode de réalisation de l'invention.

Dans le mode de réalisation décrit ici, le terminal 20 est un téléphone cellulaire.

Cette carte UICC 10b diffère de la carte 10a de la figure 1 en ce qu'elle comporte une mémoire non volatile réinscriptible 15 comportant la localisation IOC2 du terminal 20 à savoir l'identifiant CELL-ID d'une cellule du réseau cellulaire dans lequel se trouve le terminal 20.

Dans ce mode de réalisation, il n'est pas nécessaire que le terminal 20 comporte des moyens propres de géolocalisation.

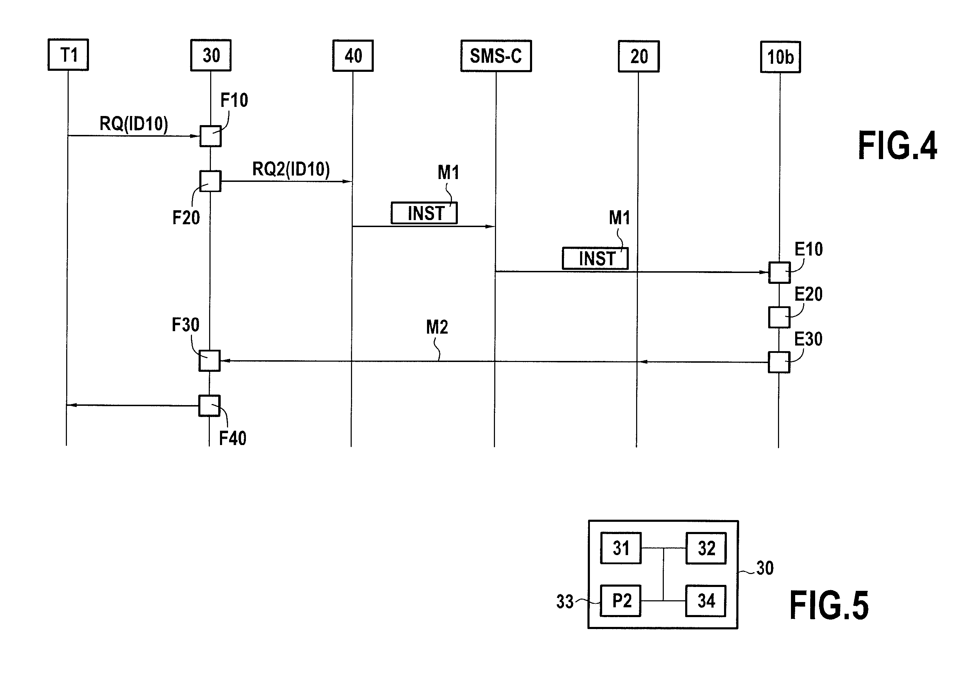

La figure 4 représente un scénario de mise en oeuvre de l'invention dans ce deuxième mode de réalisation.

Lorsque la carte UICC 10b reçoit (étape E10) le message court M1 de type D-STK, la carte UICC lit l'information de localisation LOC2 du terminal directement à partir de cette mémoire 15.

Dans le mode de réalisation de la figure 4, le message M2 est envoyé par le terminal 20 au serveur 30 conformément au protocole https.

La figure 5 représente l'architecture matérielle d'un serveur d'application conforme à l'invention.

Dans l'exemple décrit ici, ce serveur a l'architecture matérielle d'un ordinateur conventionnel. Il comporte un processeur 31, une mémoire vive de type RAM 32, une mémoire morte de type ROM 33 et des moyens de communication 34.

Dans l'exemple de réalisation décrit ici, les étapes E10 à E30 mises en oeuvre par les cartes UICC 10a, 10b et les étapes F10 à F40 mises en oeuvre par le serveur d'application 30 sont des instructions de programmes d'ordinateur.

Par conséquent, les mémoires mortes 13 des cartes UICC 10a et 10b constituent des supports d'enregistrement au sens de l'invention, support sur lesquels est enregistré un programme d'ordinateur P1 comprenant les instructions pour l'exécution des étapes E10 à E30.

De même, la mémoire morte 33 du serveur d'application 30 comporte un programme d'ordinateur P2 comprenant des instructions pour l'exécution des étapes F10 à F40.

## Revendications

1. Carte UICC (10a, 10b) comportant:
- des moyens (11) d'obtention d'une information (LOC1, LOC2) de localisation d'un terminal (20) incorporant ladite carte ; et
- des moyens (11) de contrôle aptes à déclencher l'envoi à un serveur (30), par le terminal (20), d'un message (M2) comportant ladite information.

2. Carte UICC (10a, 10b) selon la revendication 1, **caractérisée en ce qu'**elle comporte :
- des moyens (11) de réception d'un message court (M1), ce message comportant des instructions (INST) pour obtenir ladite information (LOC1, LOC2), et des instructions (INST) pour déclencher l'envoi du message (M2) comportant ladite information ; et
- des moyens (11) pour exécuter automatiquement lesdites instructions sur réception dudit message court (M1).

3. Carte UICC (10a, 10b) selon la revendication 2, **caractérisée en ce que** le message court est de type STK ou D-STK.

4. Carte UICC (10a) selon la revendication 1, **caractérisée en ce qu'**elle comporte des moyens (11) pour interroger ledit terminal (20) pour obtenir ladite information.

5. Carte UICC (10b) selon la revendication 1, **caractérisée en ce qu'**elle comporte des moyens (11) pour lire ladite information (LOC2) à partir d'une mémoire (15) de ladite carte (10b).

6. Carte UICC (10a, 10b) selon la revendication 2 **caractérisée en ce qu'**elle comporte des moyens (14) de décryptage dudit message court.

7. Carte UICC selon la revendication 1, **caractérisée en ce que** lesdits moyens (11) de contrôle sont aptes à déclencher l'envoi dudit message (M2) comportant ladite information, selon un format conforme à la norme SMS, au protocole sécurisé HTTPS, au format USSD, au protocole SIP ou au protocole SIP sécurisé.

8. Message court (M1) interprétable par une carte UICC (10a, 10b) incorporée dans un terminal (20), ce message comportant des instructions (INST) pour obtenir une information (LOC1, LOC2) de localisation du terminal (20), et des instructions (INST) pour déclencher l'envoi, à un serveur, (30) par le terminal (20), d'un message (M2) comportant ladite information.

9. Serveur d'application (30) comportant :
- des moyens (34) de réception d'une requête (RQ) émise par un premier terminal (T1) pour obtenir une information (LOC1, LOC2) d'un deuxième terminal (20) équipé d'une carte UICC (10a, 10b), l'identifiant (ID10) de ladite carte étant compris dans ladite requête ;
- des moyens (34) d'envoi d'une requête (RQ2) comportant ledit identifiant à une entité (40) apte à envoyer audit deuxième terminal (20) un message court (M1) selon la revendication 8 ;
- des moyens (34) de réception du message de réponse (M2) envoyé par ledit deuxième terminal (20) ; et
- des moyens (31, 34) de présentation de ladite information (LOC1, LOC2) audit premier terminal (T1).

10. Serveur d'application (30) selon la revendication 9, **caractérisé en ce que** ladite information est une information de localisation du deuxième terminal et **en ce que** lesdits moyens (31, 34) de présentation sont aptes à représenter la localisation (LOC1, LOC2) dudit deuxième terminal sur une carte (50).

11. Procédé mis en oeuvre par une carte UICC (10a, 10b), ce procédé comportant :
- une étape (E20) d'obtention d'une information (LOC1, LOC2) de localisation d'un terminal (20) incorporant ladite carte ; et
- une étape (E30) de contrôle apte à déclencher l'envoi à un serveur (30), par le terminal (20), d'un message (M2) comportant ladite information.

12. Procédé d'interrogation d'un terminal (20) mis en oeuvre par un serveur d'application, ce procédé comportant :
- une étape (F10) de réception d'une requête (RQ) émise par un premier terminal (T1) pour obtenir une information (LOC1, LOC2) d'un deuxième terminal (20) équipé d'une carte UICC (10a, 10b), l'identifiant (ID10) de ladite carte étant compris dans ladite requête ;
- une étape (F20) d'envoi d'une requête (RQ2) comportant ledit identifiant à une entité (40) apte à envoyer audit deuxième terminal (20) un message court (M1) selon la revendication 8 ;
- une étape (F30) de réception du message de réponse (M2) envoyé par ledit deuxième terminal (20) ; et
- une étape (F40) de présentation de ladite information (LOC1, LOC2) audit premier terminal (T1).

13. Programme d'ordinateur (P1) comportant des instructions pour l'exécution des étapes d'un procédé selon la revendication 11 lorsque ledit programme est exécuté par un ordinateur.

14. Support d'enregistrement (13) lisible par un ordinateur sur lequel est enregistré un programme d'ordinateur (P1) comprenant des instructions pour l'exécution des étapes du procédé selon la revendication 11.

15. Programme d'ordinateur (P2) comportant des instructions pour l'exécution des étapes d'un procédé selon la revendication 12 lorsque ledit programme est exécuté par un ordinateur.

16. Support d'enregistrement (33) lisible par un ordinateur sur lequel est enregistré un programme d'ordinateur (P2) comprenant des instructions pour l'exécution des étapes du procédé selon la revendication 12.
